# EUROPEAN PATENT APPLICATION

(11) **EP 3 798 937 A1**
(43) Date of publication of application: **31.03.2021**
(21) Application number: 20189231.2
(22) Date of filing: 03.08.2020
(51) Int. Cl.: G06Q 10/00, G06Q 50/04

(54) **PRESENTATION OF AN OVERVIEW OF PRODUCT LIFECYCLE RISK FOR COMPONENTS IN AN INDUSTRIAL ENVIRONMENT**

(30) Priority: 26.09.2019 US 201916583573
(71) Applicant: Rockwell Automation Technologies, Inc., Mayfield Heights, OH 44124-6188 (US)
(72) Inventor: MAYER, John D., Mayfield Heights, OH 44124 (US); BRENNAN, Timothy R., Mayfield Heights, OH 44124 (US); HARKINS, Lauren M., Mayfield Heights, OH 44124 (US); KORPELA, Jessica L., Mayfield Heights, OH 44124 (US); TRUONG, Jessica M., Mayfield Heights, OH 44124 (US); SMITH, Lisa J., Mayfield Heights, OH 44124 (US); LILLIE, David, Mayfield Heights, OH 44124 (US); ROARK, Gwendolyn, Mayfield Heights, OH 44124 (US); PARAMASIVAM, Ramesh, Mayfield Heights, OH 44124 (US); CARROLL, Matthew, Mayfield Heights, OH 44124 (US)
(74) Representative: Grünecker Patent- und Rechtsanwälte PartG mbB

(57) **Abstract**

The technology disclosed herein enables presentation of a risk overview based off of the product lifecycles for components in an industrial environment. In a particular embodiment, a method includes, in a lifecycle management system, identifying components of an industrial system having a product lifecycle and determining the product lifecycles for the components. The method further includes determining a number of replacements for the components in an inventory for the industrial system. The method also includes presenting a risk overview for the industrial system based on the product lifecycles and the number of replacements.

## Description

### TECHNICAL BACKGROUND

Many products have a product lifecycle set by the manufacturer of the respective products. A product lifecycle for a product defines when a produce will no longer be supported by the product's manufacturer. In some cases, the product lifecycle indicates more than just an end of life date for the product. For example, a product lifecycle may also define when a product is no longer fully supported but a customer can still order the product (e.g., to use as a replacement part). The product lifecycle may already be determined at time of purchase or may be determined at a later time. For example, the product's manufacturer may wait until a newer version of the product is ready for release before finalizing the product lifecycle of the older version of the product.

In some environments, such as an industrial environment, many different components operate in a single facility and may span multiple facilities. Many, if not all, of those components likely have a product lifecycle. To ensure the processes being performed using those components continue to run properly, knowledge of those lifecycles may be crucial. For instance, an operator of the industrial environment may be able to replace a component nearing the end of its lifecycle with a newer component or may be able to order more spare components to extend the amount of time until a new component is needed.

### OVERVIEW

The technology disclosed herein enables presentation of a risk overview based off of the product lifecycles for components in an industrial environment. In a particular embodiment, a method includes, in a lifecycle management system, identifying components of an industrial system having a product lifecycle and determining the product lifecycles for the components. The method further includes determining a number of replacements for the components in an inventory for the industrial system. The method also includes presenting a risk overview for the industrial system based on the product lifecycles and the number of replacements.

In some embodiments, presenting the risk overview includes presenting an indication of a first portion of the components for which less than a threshold number of the replacements are in the inventory. In those embodiments, presenting the risk overview may also include presenting an indication of where the first portion of the components are physically located.

In some embodiments, each product lifecycle of the product lifecycles indicates a current stage of stages in the product lifecycle and the stages include an active stage, an active mature stage, an end of life stage, and a discontinued stage. In those embodiments, presenting the risk overview may include presenting a number of the components that are currently at each of the stages. Also, in those embodiments, presenting the risk overview may include presenting an indication of a first component of the components that is at the discontinued stage and for which less than a threshold number of the replacements are in the inventory. Determining the threshold number of the replacements may be based on a historical replacement schedule for the first component.

In some embodiments, presenting the risk overview includes presenting an estimated amount of time before no replacements for a first component of the components will remain in the inventory based on a historical replacement schedule for the first component.

In some embodiments, presenting the risk overview includes displaying a ratio of a number of a first component currently being used in the industrial system to a number of replacements for the first component currently in the inventory.

In another embodiment, an apparatus is provided having one or more computer readable storage media and a processing system operatively coupled with the one or more computer readable storage media. Program instructions stored on the one or more computer readable storage media, when read and executed by the processing system, direct the processing system to identify components of an industrial system having a product lifecycle and determine the product lifecycles for the components. The program instructions further direct the processing system to determine a number of replacements for the components in an inventory for the industrial system and present a risk overview for the industrial system based on the product lifecycles and the number of replacements.

### BRIEF DESCRIPTION OF THE DRAWINGS

Figure 1 illustrates an industrial environment for presenting a risk overview of components therein.
Figure 2 illustrates an operation for presenting a risk overview of components in an industrial environment.
Figure 3 illustrates an industrial environment for presenting a risk overview of components therein.
Figure 4 illustrates an operational scenario for presenting a risk overview of components in an industrial environment.
Figure 5 illustrates a risk overview presented for components in an industrial environment.
Figure 6 illustrates a risk overview presented for components in an industrial environment.
Figure 7 illustrates an example computing architecture for presenting a risk overview of components in an industrial environment.

### DETAILED DESCRIPTION

Product lifecycles may be hard to track across many components that perform one or more processes in an industrial environment. Knowledge of a component's lifecycle is important because the component may fail or otherwise need to be serviced at some point during its service to an industrial process and the product lifecycle is what determines whether the component can be serviced or a replacement can be ordered. Typically a manufacturer will not continue to produce the same version of a component indefinitely and will, therefore, define the product lifecycle for the component to inform customers about when the customers should expect the component to no longer be supported by the manufacturer (or some other entity handling the servicing of the component). A customer may then determine how to handle the end of a component's lifecycle based on the customer's own needs. For example, the customer may not be able to upgrade to a newer version of the component before the lifecycle of the current component ends. In view of that knowledge, the customer is able to order spare components that will hopefully last until the customer is able to upgrade to the newer component or otherwise no longer needs the current version of the component (e.g., shuts down the process in which that component is involved).

The examples described below aggregate product lifecycle information for components in an industrial environment so that a user can easily visualize an overview of the product lifecycles for the components and can then react accordingly. In particular, the information presented in the product overview highlights the potential risks to the industrial environment (e.g., risks of shutting down various processes in the industrial environment due to components being at the end of their lifecycles, which may make the components irreplaceable) to help ensure a user is aware of those risks rather than relying on the user infer the risks based on the collected product lifecycle information. The overview may be presented as statistical information, such as percentages and graphs, regarding the lifecycle status of the components. The overview may also present more explicit indicators of higher risk components (e.g., may display component part numbers that are at risk of having no replacements within a threshold period of time). Presenting the risk to the industrial environment caused by product lifecycles in one cohesive interface helps mitigate the possibility that a user in the industrial environment will be unaware of the risk indicated by the product lifecycles. The user may, therefore, do something to address the lifecycles, such as ordering replacement parts or determining that parts need to be upgraded to newer versions.

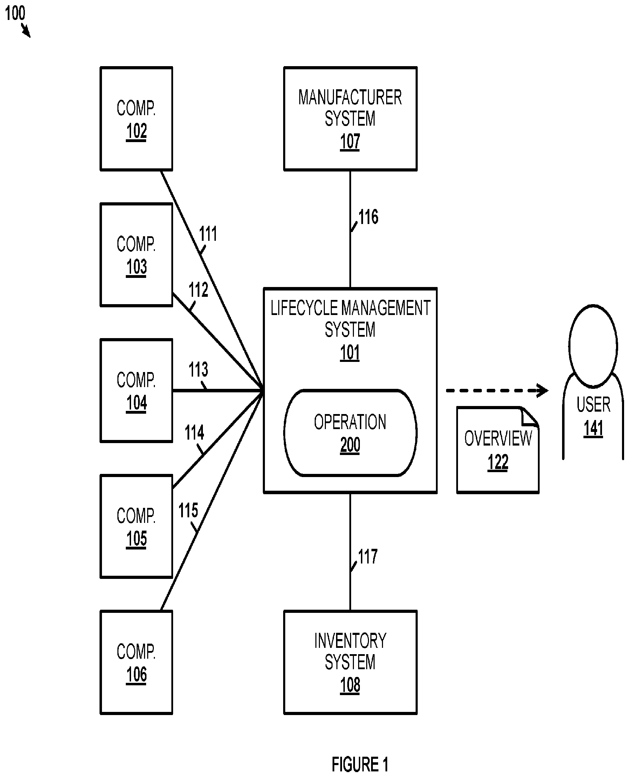

Figure 1 illustrates industrial environment 100 for presenting a risk overview of components therein. Industrial environment 100 includes lifecycle management system 101, component 102, component 103, component 104, component 105, component 106, manufacturer system 107, inventory system 108. In this example, each of components 102-106 communicate with lifecycle management system 101 over respective communication links 111-115. Lifecycle management system 101 and manufacturer system 107 communicate over communication link 116. Lifecycle management system 101 and inventory system 108 communicate over communication link 116. Communication links 111-117 may be direct wired or wireless links or may include intervening systems, networks, and/or devices.

Components 102-106 may include control systems, motors, pumps, nozzles, arms, bulbs, gears, or any other type of components that could be used in a process within an industrial environment. While components 102-106 are shown as being in communication with lifecycle management system 101 it should be understood that components of an industrial environment need not be able to communicate with lifecycle management system 101. For example, a pick and place nozzle is not likely to include circuitry needed to communicate with lifecycle management system 101, although, a machine running the nozzle may be able to communicate with lifecycle management system 101. Manufacturer system 107 is a computer system operated (either directly or through a third party) by a manufacturer of at least one of components 102-106. Manufacturer system 107 supplies product lifecycles for ones of components 102-106 manufactured by the manufacturer operating manufacturer system 107. Manufacturer system 107 may push lifecycle information to lifecycle management system 101 or may supply lifecycle information upon request from manufacturer system 107.

Inventory system 108 maintains information about spare components that are available as replacements for components 102-106. Inventory system 108 may further track components that are currently in operation within industrial environment 100 (i.e., components 102-106). Inventory system 108 may indicate a number of available replacement components for different types of components used within industrial environment 100 and may indicate where those components are located (e.g., may indicate a portion are in a storeroom of one facility and another portion are in a storeroom of another facility). The inventory information stored in inventory system 108 may be updated manually by user 141, or another user, or may be automatically updated. For example, a component or the system in which the component is installed may indicate to inventory system 108 that the component is now being used and inventory system 108 may then update its inventory information accordingly. In another example, inventory system 108 may communicate with a component sourcing application or system that updates inventory system 108 with new components received in industrial environment 100 and to where those components were delivered. In some examples, the functionality of inventory system 108 may be incorporated into lifecycle management system 101.

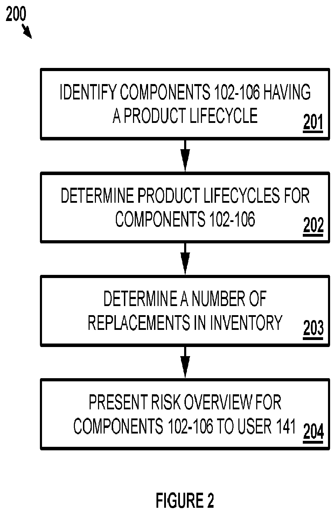

Figure 2 illustrates operation 200 for presenting a risk overview of components in an industrial environment. Operation 200 is performed by lifecycle management system 101 to present lifecycle overview 122 to user 141. In operation 200, lifecycle management system 101 identifies component 102-106 as having a product lifecycle (201). Since lifecycle management system 101 is in communication with components 102-106 in this example, manufacturer system 107 may query about components 102-106 about whether components 102-106 have a product lifecycle. In other examples, user 141 may indicate to lifecycle management system 101 that components 102-106 each have a product lifecycle, lifecycle management system 101 may query another system in industrial environment 100, such as a process control system that controls one or more of components 102-106 or inventory system 108, about components having a product lifecycle, or lifecycle management system 101 may identify that components 102-106 each have a product lifecycle in some other way.

For each of components 102-106 having a product lifecycle, lifecycle management system 101 determines the component's product lifecycle (202). Lifecycle management system 101 may query each component of components 102-106 for information regarding the component's product lifecycle. In response to the query, a component may provide lifecycle management system 101 with the component's product lifecycle, with information about how lifecycle management system 101 may obtain the product lifecycle (e.g., may direct lifecycle management system 101 to manufacturer system 107), may indicate that the product lifecycle is not yet defined, or may provide some other type of information relevant to lifecycle management system 101 determining the component's product lifecycle. In some examples, lifecycle management system 101 may query user 141 about the product lifecycle for one or more of components 102-106. For example, component 103 may come with paper documentation indicating component 103's lifecycle and user 141 may input the lifecycle into lifecycle management system 101 based on that paper documentation. In other examples, lifecycle management system 101 may determine a manufacturer of the component and query a system, such as manufacturer system 107, for the product's lifecycle.

A product lifecycle for a component may indicate two or more possible stages for a component's product lifecycle. A basic product lifecycle may simply indicate when a product will no longer be supported in any way by the manufacturer or service provider. However, many components may have more granular product lifecycles. For instance, a common product lifecycle used for industrial process components includes four stages: an active stage, an active mature stage, an end of life stage, and a discontinued stage. When a component is in the active stage, the component is the most current offering in the component's product category (i.e., there is no newer version of the component available from the manufacturer). When a component is in the active mature stage, the component is still fully supported by the manufacturer (i.e., can be serviced, can receive software updates, spares can be ordered, etc.) but a newer product or product family exists to which the component may be upgraded. When a component is in the end of life stage, a discontinued date (i.e., a date when the product lifecycle moves to the discontinued stage) has been announced for the component by the manufacturer. While in end of life, replacements for the component may still be available for purchase from the manufacturer but a user may begin plans to update to a newer component that is not in the end of life stage. When the component is in the discontinued stage, new replacements of the component can no longer be procured from the manufacturer, although, in some cases, the manufacture may still be willing to repair the components already purchased if possible. Other product lifecycles with different numbers of stages may be used in other examples. The possible product lifecycle stages may be different between each of components 102-106 depending on how each component's manufacturer decides to define the component's product lifecycle.

As mentioned above, the end of life stage begins once a discontinued date has been announced for a component. As such, the full product lifecycle for a component may not be known until certain dates, such as the discontinued date, are actually announced. Similarly, since a component does not move into the active mature stage until a newer version of the component is available, the date in which the active mature stage begins for the component may not be known until a release date for the newer version is known. Therefore, when lifecycle management system 101 determines the lifecycle for a given component, lifecycle management system 101 may only be able to determine the current stage of the product lifecycle for the component. Lifecycle management system 101 may also recognize when ones of components 102-106 are duplicates (i.e., are the same type/version of a component from a manufacturer) and, therefore, only request the product lifecycle once and associate the product lifecycle with all of the duplicate components.

Lifecycle management system 101 also determines a number of replacements for each of components 102-106 are in inventory (203). Lifecycle management system 101 may obtain information about a number of replacement components that are in inventory from inventory system 108, from user 141, or may obtain inventory information in some other way - including combinations thereof. In some example, lifecycle management system 101 may only obtain inventory information about components that are at particular stages of their lifecycle. For instance, components for which replacements can still be ordered based on their product lifecycles may not be of interest to lifecycle management system 101 when determining risk to industrial environment 100. In other examples, lifecycle management system 101 may still consider the above components when determining risk because, even if replacements for a component can be ordered, a current inventory level of replacements for that component may indicate that the component's process will be at risk of downtime if replacements are not ordered soon. In some examples, the inventory information may also include location information, which may allow lifecycle management system 101 to determine risk based on location (e.g., one facility may have a large supply of replacement components while another facility does not).

Using the product lifecycles for components 102-106, lifecycle management system 101 presents risk overview 122 to user 141 (204). Lifecycle management system 101 may include a user interface (e.g., display) to directly present risk overview 122 to user 141 or lifecycle management system 101 may present risk overview 122 to user 141 via another system, such as a user device operated by user 141, to which risk overview 122 is transferred. In an example of the latter, lifecycle management system 101 may be a cloud-based system accessible to user 141 over the Internet via a user device operated by user 141. Risk overview 122 at least indicates which of components 102-106 are at risk of causing downtime, or some other undesired issue, in industrial environment 100. Risk overview 122 may identify the risk level of a component in components 102-106 by determining whether the amount of replacements for a component in inventory are below a threshold value. The threshold value may be determined based on whether new replacements can still be ordered for the component as indicated by the component's product lifecycle, based on how much time is estimated before running out of the replacements in inventory, based on importance of the component, or based on some other factor - including combinations thereof. In some examples, user 141 may define to lifecycle management system 101 values for the risk threshold or factors that contribute to the risk threshold. In other examples, lifecycle management system 101 may use historical information about the operation of industrial environment 100, or other industrial environments, to determine the risk threshold value or contributing factors. In further examples, risk overview 122 may further organize and present information about the product lifecycles in a format that is easily consumable by user 141 so that user 141 can make decisions regarding components 102-106. For example, risk overview 122 may indicate statistical information about the product lifecycles, such as a percentage of components 102-106 at each stage of their respective product lifecycles. In some cases, such statistical information may be considered a presentation of risk (i.e., high amounts of discontinued and/or end of life parts may implicitly indicate risk). For better visualization, graphical representations may be used as well, such as representing the percentages in a bar graph or pie chart.

In some examples, risk overview 122 may present risk information about certain aspects of industrial environment 100 rather than industrial environment 100 as a whole. For instance, risk overview 122 may indicate risk information for components in a particular process of industrial environment 100, components in a particular location of industrial environment 100 (e.g., a particular facility, area of the facility, or other type of physical location), or for components in some other division of industrial environment 100. In some examples, risk overview 122 may be interactive such that user 141 may provide input requesting different information (e.g., risk information about components in a particular location) and lifecycle management system 101 may update risk overview 122 based on that input.

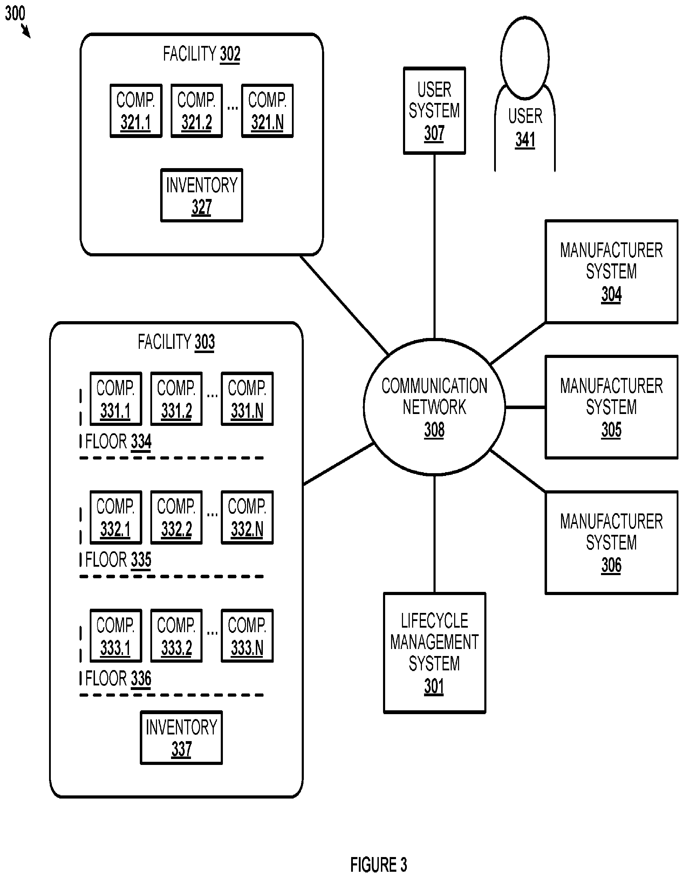

Figure 3 illustrates industrial environment 300 for presenting a risk overview of components therein. Industrial environment 300 includes lifecycle management system 301, facility 302, facility 303, manufacturer system 304, manufacturer system 305, manufacturer system 306, user system 307, and communication network 308. Communication network 308 comprises one or more networks, such as local area networks, service provider networks, wide area networks, the Internet, etc., over which communications between lifecycle management system 301, facility 302, facility 303, manufacturer system 304, manufacturer system 305, manufacturer system 306, and user system 307 are exchanged. Though not shown, facility 302 and facility 303 may include one or more internal networks to exchange communications between networkable components therein and/or communication network 308. It should be understood that, while the examples below refer to communications exchanged with facility 302 and facility 303, those communications are actually exchanged with one or more network connected computing systems located at facility 302 and facility 303. For example, the components in inventory 327 and inventory 337 may be tracked by an inventory system like inventory system 108 at one or both of facility 302 and facility 303.

In this example, facility 302 and facility 303 are operated by an entity, such as a business, that performs industrial processes, such as industrial processes to manufacture a product. User 341 is tasked by the entity (e.g., may be an employee of or contractor to the entity) to manage the lifecycle of components performing those processes at facility 302 and facility 303. Components 321 are located at facility 302 and perform one or more industrial processes for the entity. Components 331, components 332, and components 333 are located at facility 303 and perform one or more industrial processes for the entity. Facility 302 and facility 303 may be located nearby one another (e.g., on the same building campus of the entity) or may be remote to one another (e.g., located in different states or countries). Regardless of their location, user 341 is able to manage the lifecycles of components 321, components 331, components 332, and components 333 from user system 307 over communication network 308. User system 307 may be a personal computer workstation, smartphone, tablet, laptop, or some other type of computing device operated by user 341. In some examples, user 341 and user system 307 may be located at facility 302 or facility 303. Likewise, lifecycle management system 301 may be located at facility 302 or facility 303, or may be distributed across systems at facility 302, facility 303, or elsewhere.

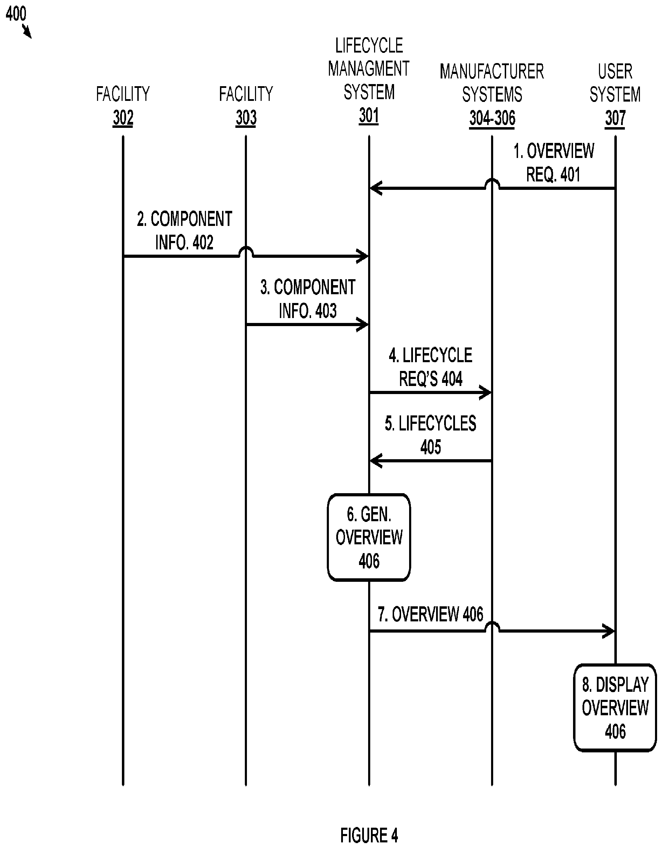

Figure 4 illustrates operational scenario 400 for presenting a risk overview of components in an industrial environment. In operational scenario 400, user system 307 transfers risk overview request 401 at step 1 to lifecycle management system 301. Risk overview request 401 may be generated by a lifecycle management application executing on user system 307, an industrial management application that includes a lifecycle management feature executing on user system 307, or some other type of application executing on user system 307. Similarly, lifecycle management system 301 may be accessed through a web browser interface of a web browser application executing on user system 307. For instance, lifecycle management system 301 may include a web server application, or otherwise be in communication with a web server system, to provide information from lifecycle management system 301 to user system 307 for presentation to user 341 (e.g., via a website or web-application). Risk overview request 401 may be generated and transferred in response to user input from user 341 instructing user system 307 to generate and transfer risk overview request 401 or user system 307 may be configured to generate and transfer risk overview request 401 automatically (e.g., periodically, upon a lifecycle management application being opened, upon the lifecycle management application being brought to the foreground on user system 307's user interface, upon user 341 navigating to a risk overview page, or some other manner in which an action may be triggered on user system 307).

After receiving risk overview request 401, lifecycle management system 301 receives component information 402 at step 2 from facility 302 and receives component information 403 at step 3 from facility 303. Component information 402 includes information identifying all of components 321, a portion of components 321, such as those of components 321 that have been updated (e.g., added, changed, removed, etc.) since facility 302 last reported component information to lifecycle management system 301, or any other type of component identification information that would be of use to lifecycle management system 301 when generating a lifecycle overview of those components. Component information 402 may include an indication that components 321 are located at facility 302 or lifecycle management system 301 may infer that components 321 are at facility 302 based on component information 402 being received from facility 302. Similarly, component information 403 includes information identifying all of components 331, components 332, and components 333, a portion of components 331, components 332, and components 333, such as those of components 331, components 332, and components 333 that have been updated (e.g., added, changed, removed, etc.) since facility 303 last reported component information to lifecycle management system 301, or any other type of component identification information that would be of use to lifecycle management system 301 when generating a lifecycle overview of those components. In this example, component information 403 indicates which floor of floor 334, floor 335, and floor 336 that each identified components are on and may further identify facility 303 or lifecycle management system 301 may infer that components 331, components 332, and components 333 are located at facility 303 based on component information 403 being received therefrom. In some examples, component information 402 and component information 403 may include an indication of a product lifecycle for one or more of the components if the product lifecycle is already known to facility 302 or facility 303. For example, a user at facility 302 or facility 303 may input the product lifecycle for a newly installed component into a process control system or reporting system.

Component information 402 and component information 403 may report each component therein individually or may report them collectively. For example, if there are 30 of the same components in components 321, the component information 402 may indicate identify the duplicated component (e.g., provide a part number and/or manufacturer of the component) and indicate how many of those components are at component information 402. Component information 402 and component information 403 also indicate components within inventory 327 and inventory 337, respectively. Inventory 327 and inventory 337 may include components that are stored (e.g., in a storeroom) or stashed (e.g., nearby a location of facility 302 or facility 303 where a component may be placed into service).

For any of components 321, components 331, components 332, and components 333 with lifecycles that are not known, or should be updated (e.g., a discontinued date not previously known), lifecycle management system 301 transfers lifecycle requests 404 at step 4 to manufacturer system 304, manufacturer system 305, and manufacturer system 306 for the product lifecycles of the components identified within lifecycle requests 404. Step 4 assumes that manufacturer system 304, manufacturer system 305, and manufacturer system 306 each are operated by a manufacturer that manufactured at least one of the components at facility 302 and facility 303. That is, lifecycle management system 301 sends lifecycles request 404 to those manufacturer systems that are operated by manufacturers of one or more components for which lifecycle management system 301 is requesting the product lifecycle.

Manufacturer system 304, manufacturer system 305, and manufacturer system 306 respond to lifecycle requests 404 by providing the requested product lifecycles 405 at step 5. A product lifecycle for a component in product lifecycles 405 may include a current lifecycle stage for a component, dates/times when one or more subsequent lifecycle stages will occur, dates/times when the component entered into the current lifecycle stage or a previous lifecycle stage, or any other type of information related to the component's product lifecycle. In some cases, a product lifecycle may not be found for a giving product and manufacturer system 304, manufacturer system 305, and manufacturer system 306 may indicate that the product lifecycle could not be found in product lifecycles 405. Lifecycle management system 301 may then attempt to acquire the product lifecycle through other means, such as requesting the product lifecycle from user 341 or a user at facility 302 or facility 303.

From product lifecycles 405, product lifecycles already known to lifecycle management system 301, components in inventory 327, and components in inventory 337, lifecycle management system 301 generates risk overview 406 at step 6. Risk overview 406 may include lifecycle overview data to be displayed by user system 307 to user 341 or may include a graphical arrangement of the data. Risk overview 406 may highlight statistics that indicate what lifecycle management system 301 considers to be higher risk. For example, lifecycle management system 301 may be configured to determine that one process having greater than 80% (i.e., threshold value) discontinued components is a high-risk process. An explicit warning may be generated in risk overview 406 (e.g., popup bubble) to indicate the high risk to user 341 or risk overview 406 may highlight the statistic that led to the high-risk determination.

In some examples, risk overview 406 may include a warning indicating which component(s) in facility 302 and facility 303 are at risk of causing downtime or other issues with their respective processes. In those examples, risk overview 406 may show the values associated with the components that caused lifecycle management system 301 to identify them as being high risk. For instance, less than a threshold number of replacements for a discontinued component may cause lifecycle management system 301 to determine the component is high risk and risk overview 406 may show how many replacements the component has in either or both of inventory 327 and inventory 337.

In some cases, the threshold number of replacements may depend on a historical replacement schedule for the component. For example, lifecycle management system 301's tracking of inventory 327 may indicate that the component is replaced on average once every ten days. Having 7 replacements in inventory 327 indicates to lifecycle management system 301 that 70 days' worth of replacements exist. If 70 days is lower than a threshold value (e.g., 90 days' worth of replacements), then lifecycle management system 301 will indicate the component is high risk. In some examples, lifecycle management system 301 may be able to designate different levels of risk. For example, lifecycle management system 301 may designate less than a 90-day supply of replacements as being high risk, less than a 120-day supply as being medium risk, and anything over a 120-day supply as being low risk.

Risk overview 406 may include risk overview data to be displayed by user system 307 to user 341 or may include a graphical arrangement of the data. In an example of the former, an application executing on user system 307 may already include instructions for graphically displaying risk overview data while, in an example of the latter, user system 307 may also require the graphical representations of the data (e.g., charts, tables, visual formatting, or other types of display parameters), as may be the case if risk overview 406 is presented as a web site.

Lifecycle management system 301 transmits risk overview 406 to user system 307 at step 7. Upon receiving risk overview 406, user system 307 displays risk overview 406 at step 8 to user 341. In some examples, user system 307 may enable user 341 to provide input requesting additional details. For instance, user 341 may indicate that they now want to see a risk overview for only those components in facility 303. User system 307 may then transfer a new risk overview request to lifecycle management system 301 with parameters in line with user 341's instructions and receive an updated risk overview from lifecycle management system 301 for display. Alternatively, user system 307 may itself be able to manipulate the data included in risk overview 406 to display the information requested by user 341. In some examples, user 341 may be able to request additional details via the display of risk overview 406. For instance, user 341 may select a display of a number of components that are at the end of life stage and user system 307 may display part numbers and locations of the components at the end of life stage. Other manipulations of risk overview 406's display may also be enabled to provide the user 341 with a display of additional and/or different information than was provided by the original risk overview 406.

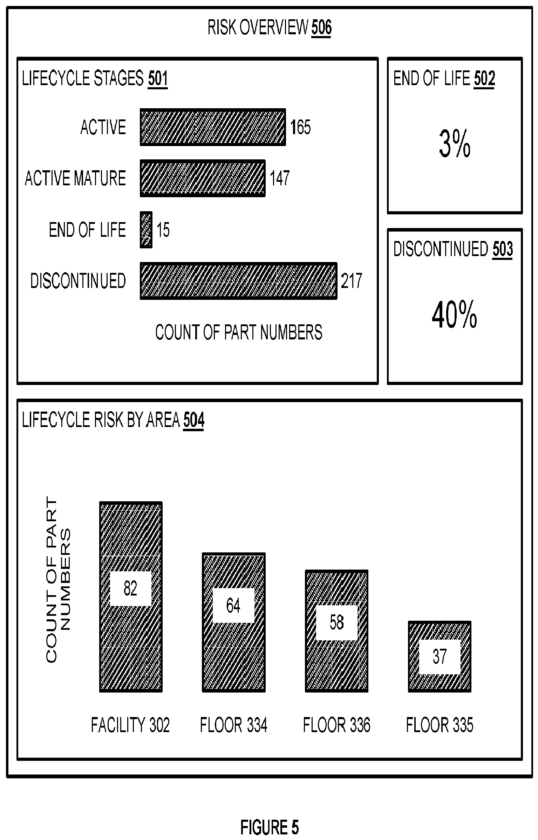

Figure 5 illustrates risk overview 506 presented for components in an industrial environment. Risk overview 506 is an example of risk overview 406 when displayed by user system 307. Other examples, risk overview 506 may display different information and may be arranged in a different manner (e.g., using different types of graphs, not using graphs, not separating data in panes, etc.). Risk overview 506 includes lifecycle stages pane 501, end of life percentage pane 502, discontinued percentage pane 503, and lifecycle risk by area pane 504. Each pane provides user 341 with a high-level visualization of the product lifecycle status of the components in industrial environment 300.

In particular, lifecycle stages pane 501 indicates that 165 components are at the active stage, 147 components are at the active mature stage, 15 components are at the end of life stage, and 217 components are at the discontinued stage. End of life percentage pane 502 and discontinued percentage pane 503 then provide additional details with respect to the values displayed in lifecycle stages pane 501 by indicating that 3% of the components are at the end of life stage and that 40% of the components are at the discontinued stage. In this example, the components are represented by part numbers rather than on a per component basis. Thus, while lifecycle stages pane 501 indicates 165 components by part number being at active stage, the number of actual components may be greater. For instance, 15 components may be the same and, therefore, share a part number. Those 15 components are represented as a single one of the 165 components at the active stage. In other examples, the total number of components at any given lifecycle stage may be presented.

Lifecycle risk by area pane 504 indicates a number of parts per area that are at the discontinued stage because, in all likelihood, an area with a high number of discontinued components is more at risk for a process going down due components that cannot be replaced. In this case, the areas are facility 302, floor 334, floor 335, and floor 336, with the latter three areas being floors of facility 303. Facility 302 has 82 discontinued components (i.e., component part numbers), floor 334 has 64 discontinued components, floor 336 has 58 discontinued components, and floor 335 has 37 discontinued components. Based on the information displayed in lifecycle risk by area pane 504, user 341 may, therefore, determine that floor 335 is at less risk from discontinued components than are the other three areas.

In some examples, lifecycle management system 301 may combine product lifecycle information in other ways to provide different statistics. For instance, lifecycle risk by area pane 504 may include the number of components at the end of life stage with the number of components at the discontinued stage. The bars may also visually differentiate between end of life components and discontinued components proportionally (e.g., show a portion of the bar corresponding to the end of life components in a different color and/or texture).

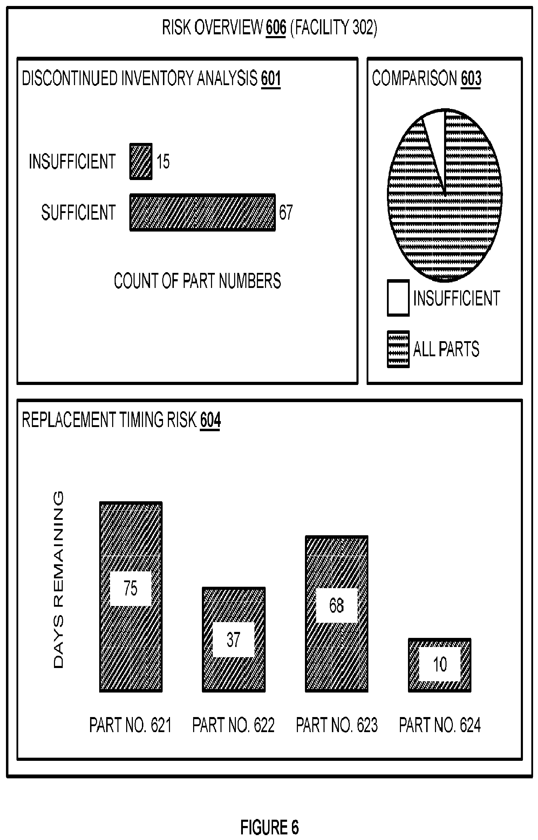

Figure 6 illustrates risk overview 606 presented for components in an industrial environment. Risk overview 606 is an example of a more focused risk overview than risk overview 506, wherein the focus is on the risk levels of components in facility 302. Risk overview 606 may be displayed after user system 307 presents risk overview 506 (e.g., upon an instruction from user 341) or may be displayed independent of risk overview 506. Risk overview 606 includes discontinued inventory analysis pane 601, comparison pane 603, and replacement timing risk pane 604. Each pane provides user 341 with a visualization of the product lifecycle risk of the components in facility 302.

In particular, discontinued inventory analysis pane 601 indicates that 15 of the discontinued components have insufficient replacements available in inventory while 67 of the discontinued components have sufficient replacements available in inventory. When generating discontinued inventory analysis pane 601, lifecycle management system 301 may consider only replacements available in inventory 327 or may consider both inventory 327 and inventory 337 (e.g., replacement components may be able to be moved from inventory 337 to inventory 327). A threshold value may be used to determine whether a component has sufficient replacements available, as described above. Comparison pane 603 displays a pie chart that indicates the ratio of discontinued components with insufficient amounts of replacements versus all components in facility 302. Replacement timing risk pane 604 describes the risk for individual part numbers illustrated based on a number of days' worth of replacements remaining (e.g., as determined based on a historical replacement scheduled determined by lifecycle management system 301). In this example, part number 621 has 75 days of replacements remaining, part number 622 has 37 days of replacements remaining, part number 623 has 68 days of replacements remaining, and part number 624 has 10 days of replacements remaining. Other types of graphs/charts may instead be displayed and the type of display may be set by preferences provided by user 341. For instance, risk overview 606 may present the number of replacements remaining rather than, or in addition to, the number of days remaining in replacement timing risk pane 604.

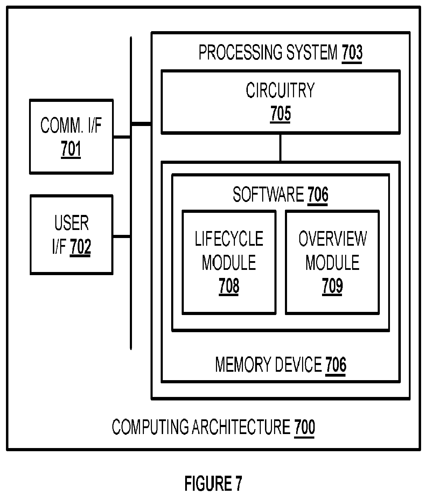

Figure 7 illustrates computing architecture 700 for presenting a risk overview of components in an industrial environment. Computing architecture 700 is representative of any computing system or systems with which the various operational architectures, processes, scenarios, and sequences disclosed herein may be implemented. Computing architecture 700 is an example computing architecture for lifecycle management system 101 and lifecycle management system 301, although alternative configurations may also be used. Computing architecture 700 comprises communication interface 701, user interface 702, and processing system 703. Processing system 703 is linked to communication interface 701 and user interface 702. Processing system 703 includes processing circuitry 705 and memory device 706 that stores operating software 707.

Communication interface 701 comprises components that communicate over communication links, such as network cards, ports, RF transceivers, processing circuitry and software, or some other communication devices. Communication interface 701 may be configured to communicate over metallic, wireless, or optical links. Communication interface 701 may be configured to use TDM, IP, Ethernet, optical networking, wireless protocols, communication signaling, or some other communication format - including combinations thereof.

User interface 702 comprises components that interact with a user. User interface 702 may include a keyboard, display screen, mouse, touch pad, or some other user input/output apparatus. User interface 702 may be omitted in some examples.

Processing circuitry 705 comprises processing circuitry, such as a microprocessor, and other circuitry that retrieves and executes operating software 707 from memory device 706. Memory device 706 comprises one or more computer readable storage media, such as a disk drive, flash drive, data storage circuitry, or some other memory apparatus that in no cases should be considered a mere propagated signal. Operating software 707 comprises computer programs, firmware, or some other form of machine-readable processing instructions. Operating software 707 includes product lifecycle module 708 and lifecycle overview module 709. Operating software 707 may further include an operating system, utilities, drivers, network interfaces, applications, or some other type of software. When executed by circuitry 705, operating software 707 directs processing system 703 to operate computing architecture 700 as described herein.

In particular, product lifecycle module 708 directs processing system 703 to identify components of an industrial system having a product lifecycle, determine the product lifecycles for the components, and determine a number of replacements for the components in an inventory for the industrial system. Lifecycle overview module 709 directs processing system 703 to present a risk overview for the industrial system based on the product lifecycles and the number of replacements.

The descriptions and figures included herein depict specific implementations of the claimed invention(s). For the purpose of teaching inventive principles, some conventional aspects have been simplified or omitted. In addition, some variations from these implementations may be appreciated that fall within the scope of the invention. It may also be appreciated that the features described above can be combined in various ways to form multiple implementations. As a result, the invention is not limited to the specific implementations described above, but only by the claims and their equivalents.

### The following is a list of further preferred embodiments of the invention:

Embodiment 1: A method for managing product lifecycles, the method comprising:
   in a lifecycle management system:
   identifying components of an industrial system having a product lifecycle;
   determining the product lifecycles for the components;
   determining a number of replacements for the components in an inventory for the industrial system;
   presenting a risk overview for the industrial system based on the product lifecycles and the number of replacements.
Embodiment 2: The method of embodiment 1, wherein presenting the risk overview comprises:
   presenting an indication of a first portion of the components for which less than a threshold number of the replacements are in the inventory.
Embodiment 3: The method of embodiment 2, wherein presenting the risk overview comprises:
   presenting an indication of where the first portion of the components are physically located.
Embodiment 4: the method of embodiment 1, wherein each product lifecycle of the product lifecycles indicates a current stage of stages in the product lifecycle and the stages include an active stage, an active mature stage, an end of life stage, and a discontinued stage.
Embodiment 5: The method of embodiment 4, wherein presenting the risk overview comprises:
   presenting a number of the components that are currently at each of the stages.
Embodiment 6: The method of embodiment 4, wherein presenting the risk overview comprises:
   presenting an indication of a first component of the components that is at the discontinued stage and for which less than a threshold number of the replacements are in the inventory.
Embodiment 7: The method of embodiment 6, further comprising:
   determining the threshold number of the replacements based on a historical replacement schedule for the first component.
Embodiment 8: The method of embodiment 1, wherein presenting the risk overview comprises:
   presenting an estimated amount of time before no replacements for a first component of the components will remain in the inventory based on a historical replacement schedule for the first component.
Embodiment 9: The method of embodiment 1, wherein presenting the risk overview comprises:
   displaying a ratio of a number of a first component currently being used in the industrial system to a number of replacements for the first component currently in the inventory.
Embodiment 10: An apparatus for a lifecycle management system to manage product lifecycles, the apparatus comprising:
   one or more computer readable storage media;
   a processing system operatively coupled with the one or more computer readable storage media; and
   program instructions stored on the one or more computer readable storage media that, when read and executed by the processing system, direct the processing system to:
      identify components of an industrial system having a product lifecycle;
      determine the product lifecycles for the components;
      determine a number of replacements for the components in an inventory for the industrial system; and
      present a risk overview for the industrial system based on the product lifecycles and the number of replacements.
Embodiment 11: The apparatus of embodiment 10, wherein to present the risk overview, the program instructions direct the processing system to:
   present an indication of a first portion of the components for which less than a threshold number of the replacements are in the inventory.
Embodiment 12: The apparatus of embodiment 11, wherein to present the risk overview, the program instructions direct the processing system to:
   present an indication of where the first portion of the components are physically located.
Embodiment 13: the apparatus of embodiment 10, wherein each product lifecycle of the product lifecycles indicates a current stage of stages in the product lifecycle and the stages include an active stage, an active mature stage, an end of life stage, and a discontinued stage.
Embodiment 14: The apparatus of embodiment 13, wherein to present the risk overview, the program instructions direct the processing system to:
   present a number of the components that are currently at each of the stages.
Embodiment 15: The apparatus of embodiment 13, wherein to present the risk overview, the program instructions direct the processing system to:
   present an indication of a first component of the components that is at the discontinued stage and for which less than a threshold number of the replacements are in the inventory.
Embodiment 16: The apparatus of embodiment 15, wherein the program instructions further direct the processing system to:
   determine the threshold number of the replacements based on a historical replacement schedule for the first component.
Embodiment 17: The apparatus of embodiment 10, wherein to present the risk overview, the program instructions direct the processing system to:
   present an estimated amount of time before no replacements for a first component of the components will remain in the inventory based on a historical replacement schedule for the first component.
Embodiment 18: The apparatus of embodiment 10, wherein to present the risk overview, the program instructions direct the processing system to:
   display a ratio of a number of a first component currently being used in the industrial system to a number of replacements for the first component currently in the inventory.
Embodiment 19: One or more computer readable storage media having program instructions stored thereon for managing product lifecycles, the program instructions, when read and executed by a processing system, direct the processing system to:
   identify components of an industrial system having a product lifecycle;
   determine the product lifecycles for the components;
   determine a number of replacements for the components in an inventory for the industrial system; and
   present a risk overview for the industrial system based on the product lifecycles and the number of replacements.
Embodiment 20: The one or more computer readable storage media of embodiment 19, wherein to present the risk overview, the program instructions direct the processing system to:
   present an indication of a first portion of the components for which less than a threshold number of the replacements are in the inventory.

## Claims

1. A method for managing product lifecycles, the method comprising:
in a lifecycle management system:
identifying components of an industrial system having a product lifecycle;
determining the product lifecycles for the components;
determining a number of replacements for the components in an inventory for the industrial system;
presenting a risk overview for the industrial system based on the product lifecycles and the number of replacements.

2. The method of claim 1, wherein presenting the risk overview comprises:
presenting an indication of a first portion of the components for which less than a threshold number of the replacements are in the inventory.

3. The method of claim 2, wherein presenting the risk overview comprises:
presenting an indication of where the first portion of the components are physically located.

4. The method of one of claims 1 to 3, wherein each product lifecycle of the product lifecycles indicates a current stage of stages in the product lifecycle and the stages include an active stage, an active mature stage, an end of life stage, and a discontinued stage.

5. The method of claim 4, wherein presenting the risk overview comprises:
presenting a number of the components that are currently at each of the stages.

6. The method of claim 4, wherein presenting the risk overview comprises:
presenting an indication of a first component of the components that is at the discontinued stage and for which less than a threshold number of the replacements are in the inventory.

7. The method of claim 6, further comprising:
determining the threshold number of the replacements based on a historical replacement schedule for the first component.

8. The method of one of claims 1 to 7, at least one of:
wherein presenting the risk overview comprises:
presenting an estimated amount of time before no replacements for a first component of the components will remain in the inventory based on a historical replacement schedule for the first component; and
wherein presenting the risk overview comprises:
displaying a ratio of a number of a first component currently being used in the industrial system to a number of replacements for the first component currently in the inventory.

9. An apparatus for a lifecycle management system to manage product lifecycles, the apparatus comprising:
one or more computer readable storage media;
a processing system operatively coupled with the one or more computer readable storage media; and
program instructions stored on the one or more computer readable storage media that, when read and executed by the processing system, direct the processing system to:
identify components of an industrial system having a product lifecycle;
determine the product lifecycles for the components;
determine a number of replacements for the components in an inventory for the industrial system; and
present a risk overview for the industrial system based on the product lifecycles and the number of replacements.

10. The apparatus of claim 9, wherein to present the risk overview, the program instructions direct the processing system to:
present an indication of a first portion of the components for which less than a threshold number of the replacements are in the inventory,
wherein to present the risk overview, the program instructions direct the processing system to:
present an indication of where the first portion of the components are physically located.

11. The apparatus of claim 9 or 10, wherein each product lifecycle of the product lifecycles indicates a current stage of stages in the product lifecycle and the stages include an active stage, an active mature stage, an end of life stage, and a discontinued stage.

12. The apparatus of claim 11, at least one of:
wherein to present the risk overview, the program instructions direct the processing system to:
present a number of the components that are currently at each of the stages; and
wherein to present the risk overview, the program instructions direct the processing system to:
present an indication of a first component of the components that is at the discontinued stage and for which less than a threshold number of the replacements are in the inventory, wherein the program instructions further direct the processing system to:
determine the threshold number of the replacements based on a historical replacement schedule for the first component.

13. The apparatus of one of claims 9 to 12, at least one of:
wherein to present the risk overview, the program instructions direct the processing system to:
present an estimated amount of time before no replacements for a first component of the components will remain in the inventory based on a historical replacement schedule for the first component; and
wherein to present the risk overview, the program instructions direct the processing system to:
display a ratio of a number of a first component currently being used in the industrial system to a number of replacements for the first component currently in the inventory.

14. One or more computer readable storage media having program instructions stored thereon for managing product lifecycles, the program instructions, when read and executed by a processing system, direct the processing system to:
identify components of an industrial system having a product lifecycle;
determine the product lifecycles for the components;
determine a number of replacements for the components in an inventory for the industrial system; and
present a risk overview for the industrial system based on the product lifecycles and the number of replacements.

15. The one or more computer readable storage media of claim 14, wherein to present the risk overview, the program instructions direct the processing system to:
present an indication of a first portion of the components for which less than a threshold number of the replacements are in the inventory.
